(19) **Europäisches Patentamt**

**European Patent Office**

**Office européen des brevets**

(11) Publication number: **0 108 851**
**B1**

(12) **EUROPEAN PATENT SPECIFICATION**

(45) Date of publication of patent specification: **30.07.86**

(21) Application number: **82306877.0**

(22) Date of filing: **22.12.82**

(51) Int. Cl.⁴: **H 04 N 3/20,** H 04 N 5/44,
G 09 G 1/14

(54) **Video display apparatus having an automatic brightness limiter.**

(30) Priority: **11.11.82 JP 198420/82**

(43) Date of publication of application:
**23.05.84 Bulletin 84/21**

(45) Publication of the grant of the patent:
**30.07.86 Bulletin 86/31**

(84) Designated Contracting States:
**DE FR GB**

(56) References cited:
**DD-A- 122 168**
**DE-B-2 438 271**
**DE-B-2 625 347**
**US-A-4 298 886**

(73) Proprietor: **SHARP KABUSHIKI KAISHA.**
**22-22 Nagaike-cho Abeno-ku**
**Osaka 545 (JP)**

(72) Inventor: **Hibi, Hitoshi**
**614-196 Arai**
**Yaita-shi Tochigi-ken (JP)**

(74) Representative: **Wright, Peter David John et al**
**R.G.C. Jenkins & Co. 12-15, Fetter Lane**
**London EC4A 1PL (GB)**

## Description

This invention is in relation to an automatic brightness limiter circuit (ABL) for video display apparatus such as television sets and offers an ABL circuit suitable for use when connecting a personal computer to the television set and superposing data from the personal computer onto the screen of the television set and displaying both the data and a television picture simultaneously.

It is well known that, in normal color television sets, the upper limit of the beam current in the cathode ray tube is held to a certain value using an ABL circuit for the purpose of protection against damaging the horizontal output transistor and the horizontal output transformer by too high a beam current.

When displaying television broadcasts and data displays of digital signals from a personal computer simultaneously, the signals composing the computer display are discontinuous "1" or "0" digital signals whereas the TV display is composed of picture signals which change continuously with time, excluding blanking periods. It is desirable in composite displays formed of these two signals that the TV picture signals be erased or the contrast lowered for ease of viewing during the period that the digital signals exist; the television broadcast pictures in the composite display form a data background display for the digital signals.

In a television set receiving the foregoing composite display, the beam current $I_K$ of the cathode ray tube will be the sum of the broadcast (video) display component $I_L$ and display component $I_D$ of the digital signal. In other words, it may be expressed as follows.

$$I_K = I_L + I_D$$

Here, if we feed back the detected beam current value $I_K$ to the brightness control circuits of both the broadcast display and the digital signal display as in conventional ABL circuits, it may be expressed by the following.

$$I_L = f(I_K)$$

$$I_D = g(I_K)$$

components $I_L$ and $I_D$ vary as functions of the overall beam current $I_K$. That is, as the contrast or brightness (as the digital signals are composed of values of "1" or "0", contrast and brightness will be the same), Changes according to the broadcast display forming the background, the display will become difficult to view. The characters of the digital signal dfisplay will be particularly difficult to read when the brightness of the broadcast display changes greatly or when it changes rapidly.

In GB—A—1 554 663 there is disclosed an arrangement for displaying symbol data superposed on the main video picture shown on a television set. The symbol data signal and the main video picture signal are processed in part by separate circuitry. Further circuitry provides a pulse synchronised with the main video picture signal and this pulse is used as a control input to variable gain amplifiers which effect the main video picture signal amplitude but not the symbol data signal amplitude. The effect of this arrangement is to reduce the brightness of the main video picture on a predetermined portion of the television screen, the symbol data being displayed superposed on this reduced brightness portion. However, the system of GB—A—1 554 663 appears not to contain an automatic brightness limiter at all, or any other system in which signal amplitude is controlled in a feedback manner.

According to the present invention there is provided video display apparatus operable to display superimposed images one of which is produced in response to a first video signal and has brightness levels distributed through a continuous range thereof, and the other of which is produced in response to a second video signal and has discrete brightness levels, the apparatus comprising a cathode ray tube, means to amplify the first video signal, means to mix the first and second video signals, and means to supply the cathode ray tube with the mixed signal to develop a signal beam, the said means to amplify the first signal being variable to vary the amplitude of the first video signal without substantially varying the amplitude of the second video signal, characterised in that the apparatus further comprises means for pulse amplifying the said second video signal, means for limiting the amplitude of the said second video signal, means for developing an automatic brightness limiter output when the beam current of the said cathode ray tube exceeds a predetermined value, and means to control the gain of the said means to amplify the first video signal in response to the said automatic brightness limiter output, whereby the said varying of the amplitude of the first video signal is in response to the brightness of the display as measured by the cathode ray tube beam current.

The video display apparatus preferably also has brightness control means to vary the gain of the said means to pulse amplify the said second video signal.

According to the present invention there is also provided a television set having video display apparatus as described above and means for receiving a broadcast television signal in order to provide the said first video signal.

An embodiment of the present invention, given by way of non-limitative example, will now be described with reference to the accompanying drawings, in which:

Figure 1 is a block diagram of an embodiment of the invention; and

Figure 2 is a detailed circuit diagram of a part of the embodiment of Figure 1.

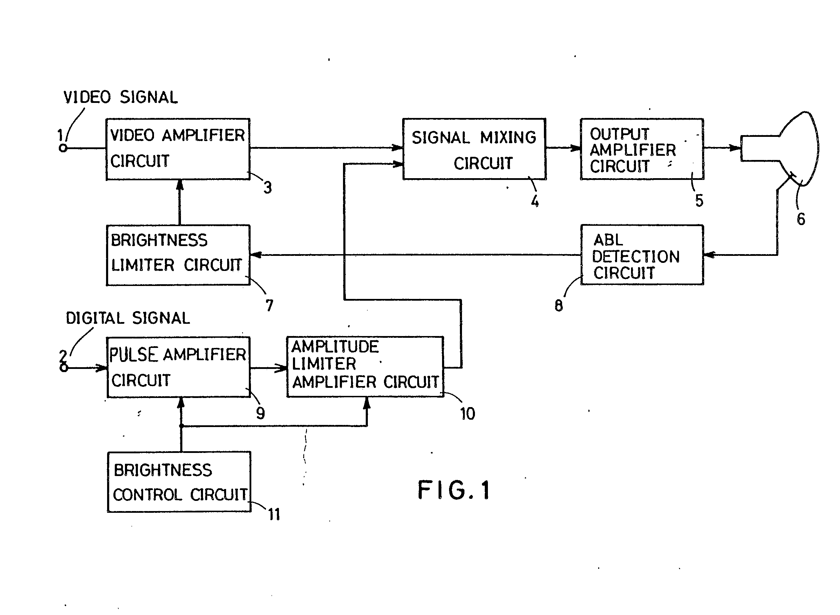

In the apparatus of Figure 1 video signals received from normal broadcasts are supplied to input terminal 1 and the digital signals from a personal computer are supplied to input terminal 2. The video signals supplied to input terminal 1 are supplied to a video amplifier circuit 3 where they are amplified and then fed to a signal mixing circuit 4. The strength of the video signal is controlled in the video amplifier circuit 3 by a brightness limiter circuit 7 which controls the amplifier gain. The digital signals supplied to input terminal 2 are amplified and their amplitude is limited by a pulse amplifier circuit 9 and an amplitude limiter amplifier circuit 10 respectively. The digital signals are then fed to a signal mixing circuit 4. In this instance, the amplifier gain of both digital signal amplifier circuits 9 and 10 is controlled by a brightness control circuit 11 and amplitude limiting is carried out in the amplitude limiter circuit 10 to prevent the amplitude of the digital signal from exceeding a specified value.

The video signal and digital signal are next mixed in the signal mixing circuit 4. As the value "1" of the digital signal is, however, normally greater than the peak value of the video signal in this case the digital signal only is output in place of the video signal during the period that this digital signal output "1" exists. The mixed signal obtained from the mixing circuit 4 in this manner is supplied to an output amplifier circuit 5 and after being amplified here is fed to cathode ray tube 6. As a result, the received television broadcast will be displayed as the background and the characters and graphics that are the data from the personal computer will be displayed superposed on this background.

If the video signal or digital signal supplied to the cathode ray tube 6 increases for some reason such as when adjusting brightness, and the average beam current of the cathode ray tube 6 exceeds a prescribed value, this will be detected by an ABL detection circuit 8 and the brightness limiter circuit 7 is controlled based on this detected output. The gain of video amplifier circuit 3 is reduced in such a case and the brightness of the display on the cathode ray tube, particularly the background display, is controlled. Furthermore, the brightness of the characters and graphics displayed on the screen by the digital signal remains constant even in this case and will change only by adjustment of the brightness control circuit 11. However, even if attempts are made to increase the brightness without limit by adjusting the brightness control circuit 11, the limiting action of amplitude limiter circuit 10 prevents the brightness value from increasing beyond a prescribed value.

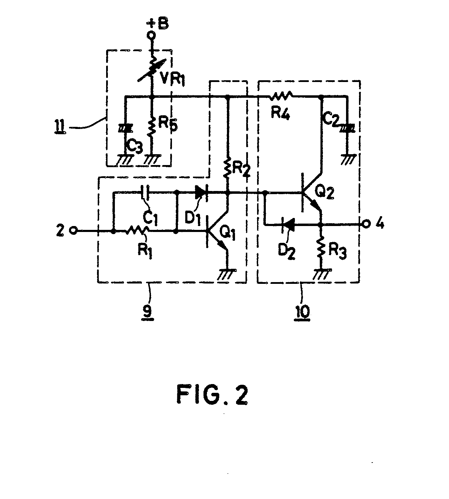

Figure 2 shows an example of a circuit from implementing the pulse amplifier circuit 9, the amplitude limiter circuit 10, and the brightness control circuit 11 of Figure 1. Here, the pulse amplifier circuit 9 is composed of transistor $Q_1$, resistors $R_1$ and $R_2$, capacitor $C_1$ and diode $D_1$. The amplitude limiter circuit 10 is compoosed of transistor $Q_2$, diode $D_2$, resistors $R_3$ and $R_4$ and capacitor $C_2$. The digital signal supplied to input terminal 2 is pulse amplified in pulse amplifier circuit 9, is output from the collector of transistor $Q_1$, and is fed to the base of transistor $Q_2$ of amplitude limiter amplifier circuit 10. If the amplitude of the digital signal is fed to the base of transistor $Q_2$ is high and its pulse width also wide, the collector voltage will drop due to the voltage drop across resistor $R_4$ resulting from the increase in collector current of transistor $Q_2$ and as a result, the amplitude of the digital signal taken from the emitter of transistor $Q_2$ will be controlled.

The brightness control circuit 11 here is composed of resistor $R_5$, capacitor $C_3$ and brightness adjusting variable resistor $VR_1$. The drive voltage supplied to the pulse amplifier circuit 9 and the amplitude limiter amplifier circuit 10 is varied by variable control of variable resistor $VR_1$ and this varies the amplifier gain of the amplifier circuits 9 and 10 and controls the amplitude of the digital signal taken from amplitude limiter circuit 10 which, in effect, changes the brightness of the characters and graphics displayed on the screen.

## Claims

1. Video display apparatus operable to display superimposed images one of which is produced in response to a first video signal and has brightness levels distributed through a continuous range thereof, and the other of which is produced in response to a second video signal and has discrete brightness levels,

the apparatus comprising a cathode ray tube (6), means (3) to amplify the first video signal, means (4) to mix the first and second video signals, and means (5) to supply the cathode ray tube (6) with the mixed signal to develop a signal beam, the said means (3) to amplify the first signal being variable to vary the amplitude of the first video signal without substantially varying the amplitude of the second video signal,

characterised in that

the apparatus further comprises means (9) for pulse amplifying the said second video signal, means (10) for limiting the amplitude of the said second video signal, means (8) for developing an automatic brightness limiter output when the beam current of the said cathode ray tube (6) exceeds a predetermined value, and means (7) to control the gain of the said means to amplify the first video signal in response to the said automatic brightness limiter output, whereby the said varying of the amplitude of the first video signal is in response to the brightness of the display as measured by the cathode ray tube beam current.

2. Video display apparatus according to claim 1 further having brightness control means (11) to vary the gain of the said means (9) to pulse amplify the said second video signal.

3. A television having video display apparatus according to claim 1 or claim 2 and means for receiving a broadcast television signal in order to provide the said first video signal.

## Patentansprüche

1. Videobild-Wiedergabeeinrichtung zur Darstellung überlagerter Bidler, von denen eines in Abhängigkeit eines ersten Videosignals erzeugt wird und über einen Bereeich kontinuirlich verteilte Helligkeitspegel aufweist, während ein anderes in Abhängigkeit eines zweiten Videosignals erzeugt wird und diskrete Helligkeitspegel aufweist, mit

einer Kathodenstrahlröhre (6),

einer Einrichtung (3) zur Verstärkung des ersten Videosignals,

einer Einrichtung (4) zur Mischung des ersten mit dem zweiten Videosignal, und mit

einer Einrichtung (5) zur Versorgung der Kathodenstrahlröhre (3) mit dem durch Mischung gebildeten Signal zur Erzeugung eines Signalstrahles, wobei die Einrichtung (3) zur Verstärkung des ersten Videosignals derart ansteuerbar ist, daß die Amplitude des ersten Videosignals ohne wesentliche Veränderung der Amplitude des zweiten Videosignals einstellbar ist,

gekennzeichnet durch

eine Einrichtung (9) zur Impulsverstärkung des zweiten Videosignals,

eine Einrichtung (10) zur Begrenzung der Amplitude des zweiten Videosignals,

eine Einrichtung (8) zur Erzeugung eines Ausgangssignals zur automatischen Helligkeitsbegrenzung, wenn der Strahlstrom der Kathodenstrahlröhre (6) einen vorbestimmten Wert übersteigt, und durch

eine Einrichtun (7) zur Steuerung des Verstärkungsgrades der Einrichtung (3) zur Verstärkung des ersten Videosignals in Abhängigkeit des Ausgangssignals zur automatischen Helligkeitssteuerung, so daß die Veränderung der Amplitude des ersten Videosignals in Abhängigkeit der Helligkeit der Bildwiedergabe durchführbar ist, die anhand Starhistromes dder Kathodenstrahlröhre (6) gemessen wird.

2. Videobild-Wiedergabeeinrichtung nach Anspruch 1, gekennzeichnet durch eine Helligkeitssteuereinrichtung (11) zur Veränderung des Verstärkungsgrades der Einrichtung (9) zur Impulsverstärkung des zweiten Videosignals.

3. Fernseher mit einer Einrichtung zum Empfang eines Fernsehfunksignals, dadurch gekennzeichnet, daß er eine Videobild-Wiedergabeeinrichtung nach Anspruch 1 oder 2 enthält, und daß das erste Videosignal aus dem Fernsehfunksignal erhalten wird.

## Revendications

1. Appareil d'affichage vidéo apte à réaliser l'affichage d'images superposées, dont l'une est produite en réluminosité répartis dans une gamme continue du signal, et dont l'autre est produite en réponse à un second signal vidéo et possède des niveaux discrets de luminosité, l'appareil comportant un tube cathodique (6), des moyens (3) servant à mélanger les premier et second signaux vidéo, et des moyens (5) servant à envoyer au tube cathodique (6) le signal mixte de manière à produire un faisceau formant signal, lesdits moyens (3) servant à amplifier le premier signal étant modifiables de maînière à réaliser une modification de l'amplitude du premier signal vidéo sans modifier de façon substantielle l'amplitude du second signal vidéo, caractérisé en ce que l'appareil comporte en outre des moyens (9) servant à réaliser une amplification de l'impulsion dudit second signal vidéo, des moyens (10) servant à limiter l'amplitude dudit second signal vidéo, des moyens (8) servant à produire un signal de sortie du limiteur automatique de luminosité lorsque le courant du faisceau dudit tube cathodique (6) dépasse une intensité prédéterminée, et des moyens (7) servant à commander le gain desdits moyens servant à amplifier le premier signal vidéo en réponse audit signal de sortie du limiteur automatique de luminosité, ce qui a pour effet que ladite modification de l'amplitude du premier signal vidéo s'effectue en réponse à la luminosité de l'affichage, telle qu'elle est mesurée par le courant du faisceau du tube cathodique.

2. Appareil d'affichage vidéo selon la revendication 1, comportant en outre des moyens (11) de réglage de la luminosité, servant à modifier le gain desdits moyens (9) servant à réaliser l'amplification de l'impulsion dudit signal vidéo.

3. Appareil de télévision comportant un appareil d'affichage vidéo selon la revendication 1 ou 2 et des moyens pour recevoir un signal de télévision émis, afin de produire ledit premier signal vidéo.

VIDEO SIGNAL

```
                    ┌──────────────┐           ┌──────────────┐   ┌──────────────┐
                    │ VIDEO AMPLIFIER│         │ SIGNAL MIXING │   │ OUTPUT        │
 1 ○───────────────▶│ CIRCUIT       │────────▶ │ CIRCUIT       │──▶│ AMPLIFIER     │──▶ ⌐
                    │              3│           │             4 │   │ CIRCUIT     5 │
                    └──────────────┘           └──────────────┘   └──────────────┘      6

                    ┌──────────────┐                             ┌──────────────┐
                    │ BRIGHTNESS    │◀────────────────────────── │ ABL          │
                    │ LIMITER CIRCUIT│                           │ DETECTION     │◀──
                    │             7 │                            │ CIRCUIT     8 │
                    └──────────────┘                             └──────────────┘
 DIGITAL SIGNAL
                    ┌──────────────┐   ┌──────────────────┐
                    │ PULSE AMPLIFIER│  │ AMPLITUDE        │
 2 ○───────────────▶│ CIRCUIT       │─▶│ LIMITER          │───
                    │             9 │   │ AMPLIFIER CIRCUIT│ 10
                    └──────────────┘   └──────────────────┘

                    ┌──────────────┐
                    │ BRIGHTNESS    │
                    │ CONTROL CIRCUIT│
                    │            11 │
                    └──────────────┘
```

FIG. 1

0 108 851

FIG. 2

2